# EUROPEAN PATENT APPLICATION

(11) **EP 4 691 978 A1**
(43) Date of publication of application: **11.02.2026**
(21) Application number: 24778806.0
(22) Date of filing: 15.02.2024
(51) Int. Cl.: C01B 32/28, B82Y 40/00, C09K 11/65

(54) **METHOD FOR SEPARATING OR CONCENTRATING ND PARTICLES HAVING GROUP-14 COLOR CENTER**

(30) Priority: 27.03.2023 JP 2023049170
(71) Applicant: Daicel Corporation, Osaka-shi, Osaka 530-0011 (JP); The University of Osaka, Osaka 565-0871 (JP)
(72) Inventor: MAKINO, Yuto, Tokyo 108-8230 (JP); ISHIHARA, Hajime, Suita-shi, Osaka 565-0871 (JP); ASHIDA, Masaaki, Suita-shi, Osaka 565-0871 (JP); HORAI, Takao, Suita-shi, Osaka 565-0871 (JP); SAITO, Yoshiki, Suita-shi, Osaka 565-0871 (JP)
(74) Representative: Grünecker Patent- und Rechtsanwälte PartG mbB
(86) International application number: PCT/JP2024/005369
(87) International publication number: WO 2024/202661

(57) **Abstract**

The present invention provides a method for separating or concentrating nanodiamond (ND) particles containing a group-14 color center, the method including: irradiating a dispersion containing mixed particles of ND particles containing a color center of any one group 14 element selected from the group consisting of Si, Ge, Sn, and Pb (a group-14 color center) and ND particles not containing the group-14 color center with laser light having an energy equal to or higher than the resonance absorption energy of the group-14 color center; and selectively moving the ND particles containing the group-14 color center using a optical pressure generated by resonance absorption of the laser light.

## Description

### Technical Field

The present invention relates to a method for separating or concentrating nanodiamond particles containing a color center of a group 14 element selected from the group consisting of Si, Ge, Sn, and Pb (hereinafter, the color center will be referred to as a "group-14 color center").

The following abbreviations are used in the present specification.
ND: Nanodiamond
NV: Nitrogen-vacancy
SiV Silicon-vacancy
GeV: Germanium-vacancy
SnV: Tin-vacancy
PbV: Lead-vacancy

### Background Art

A method of sorting fluorescent nanodiamond particles containing an NV center in a glass capillary using optical pressure is known (Non-Patent Literature 1), but the sorting efficiency is not sufficient.

### Citation List

### Non-Patent Literature

Non-Patent Literature 1: ACS Appl. Nano Mater. 2020, 3, 4127-4134

### Summary of Invention

### Technical Problem

The main purpose of the present invention is to provide a method for separating or concentrating fluorescent ND particles with high efficiency.

### Solution to Problem

The present invention provides the following method for separating or concentrating ND particles.
[1] A method for separating or concentrating nanodiamond (ND) particles containing a group-14 color center, the method including irradiating a dispersion containing mixed particles of ND particles containing a color center of any one group 14 element selected from the group consisting of Si, Ge, Sn, and Pb (a group-14 color center) and ND particles not containing the group-14 color center with laser light having an energy equal to or higher than a resonance absorption energy of the group-14 color center and thereby selectively moving the ND particles containing the group-14 color center using a optical pressure generated by absorption of the laser light.
[2] The method for separating or concentrating ND particles containing a group-14 color center according to [1], wherein the laser light is laser light having an energy equal to the resonance absorption energy of the group-14 color center, and the optical pressure is a optical pressure generated by resonance absorption of the laser light.

### Advantageous Effects of Invention

Compared to the optical pressure that is generated when ND particles containing an NV center are irradiated with laser light having an energy corresponding to the resonance absorption energy of the NV color center, the optical pressure that is generated when ND particles containing a group-14 color center are irradiated with laser light having an energy equal to or higher than the resonance absorption energy of the group-14 color center is sufficiently large. Therefore, according to the present invention, ND particles containing the group-14 color center can be efficiently separated or concentrated using the optical pressure resulting from the laser light. In addition, the separated or concentrated ND particles containing the group-14 color center have a narrow line width of the fluorescence peak, and thus, the ND particles are more advantageous in bioimaging.

### Brief Description of Drawings

FIG. 1 is a layout diagram illustrating an optical experiment of optical pressure fractionation.
FIG. 2 illustrates the photoluminescence (PL) spectra of an aqueous dispersion of SiV-undoped NDs and GeV-undoped NDs during irradiation with an optical pressure source laser, with the ratio of the SiV-undoped NDs to the GeV-undoped NDs being 5/1. The PL intensity is normalized at an intensity of 2.06 eV, which is the fluorescence peak of the GeV center. The enlarged view illustrates the area near the fluorescence peak of the SiV center.
FIG. 3 illustrates the relative intensity (SiV/GeV) of fluorescence derived from the SiV center and the GeV center. Normalization is carried out at the relative intensity at the time 0 h.
FIG. 4 illustrates the full width at half maximum of the fluorescence peaks derived from (a) the SiV center and (b) the GeV center.
FIG. 5 illustrates the relative intensity of fluorescence (SiV/GeV) derived from the SiV center and the GeV center, which is normalized at the relative intensity at the time 0 h.
FIG. 6 illustrates the full width at half maximum of the fluorescence peaks derived from (a) the SiV center and (b) the GeV center.

### Description of Embodiments

Particles to which the method according to an embodiment of the present invention is applied are mixed particles including ND particles containing one type of group-14 color center and ND particles not containing the one type of group-14 color center. A dispersion containing the mixed particles in a solvent is irradiated with laser light having an energy equal to or higher than the resonance absorption energy of the one type of color center. When the laser light is irradiated, the ND particles that are to be separated or concentrated and that absorb the laser light selectively move in the advancing direction of the laser light due to the optical pressure that is generated by the absorption of the laser light. Moreover, optical pressure based on the absorption of the laser light is not generated with regard to the ND particles that are not to be separated or concentrated and that do not absorb the laser light. As a result, the ND particles that resonantly absorb the laser light are separated or concentrated.

Examples of the solvent that is used to prepare the dispersion include water; alcohols having 1 to 6 carbons, such as ethanol, methanol, isopropanol, and butanol; ketones such as acetone, methyl ethyl ketone, and methyl isobutyl ketone; ethers such as diethyl ether and diisopropyl ether; acetates such as methyl acetate and ethyl acetate; halogenated hydrocarbons such as methylene chloride, chloroform, and carbon tetrachloride; aromatic hydrocarbons such as benzene and toluene; aliphatic hydrocarbons such as hexane; alicyclic hydrocarbons such as cyclohexane; and tetrahydrofuran, acetonitrile, dimethylformamide, dimethylacetamide, and dimethyl sulfoxide. A single type of these solvents can be used alone, or two or more types thereof can be used in combination.

When ND particles to be separated and containing a group-14 color center are irradiated with a laser having an energy that matches the resonance absorption energy of the ND particles, a optical pressure (resonance absorption force) is generated by resonance absorption, and the optical pressure is maximized in this case. When the ND particles are irradiated with a laser having an energy higher than the resonance absorption energy of the ND particles, resonance does not occur, but a optical pressure based on the absorption power is generated, and thereby the ND particles to be separated can be separated by the optical pressure. Here, the optical pressure for carrying out separation or concentration is maximized when the ND particles are irradiated with a laser having an energy that matches the resonance absorption energy of the ND particles (the optical pressure based on the resonance absorption force), and is greater than the absorption force that is generated when the ND particles are irradiated with a laser having an energy higher than the resonance absorption energy of the ND particles, and thus the ND particles can be separated more efficiently. Accordingly, the laser is most preferably a laser having an energy that matches the resonance absorption energy, and a laser having an energy higher than the resonance absorption energy can generate a optical pressure that is large enough to separate or concentrate the ND particles. The maximum value of the energy of the laser having an energy higher than the resonance absorption energy is not particularly limited, but is, for example, 4 eV, and preferably 3 eV.

The concentration of the ND mixed particles in the dispersion is preferably from 0.1 to 20 mass%, and more preferably from 1 to 10 mass%.

The temperature of the dispersion when the laser light is irradiated is preferably from 5 to 60°C, and more preferably from 15 to 35°C.

The color centers of the group 14 element include an SiV color center, a GeV color center, an SnV color center, and a PbV color center. The ND particles to be separated or concentrated are ND particles including any one of the SiV color center, the GeV color center, the SnV color center, and the PbV color center.

A container for storing the dispersion is, for example, a container having an elongated shape, such as a capillary. In the case of such a container having an elongated shape, when the container is irradiated with laser light from one end portion along the longitudinal direction of the container, the ND particles to be separated or concentrated move toward the end portion of the opposite side along the advancing direction of the laser light due to the optical pressure that is generated by the resonance absorption of the laser light, and are separated or concentrated. When the container is long enough to separate or concentrate the ND particles, the ND particles can be sufficiently separated or concentrated by irradiating the ND particles once with the laser light. The ND particles can be separated or concentrated at a higher level by repeatedly subjecting the dispersion in which the ND particles are separated or concentrated to the method according to an embodiment of the present invention.

The ND particles not to be separated or concentrated may contain a color center other than the color center of the specific one type of group 14 element. For example, in a case in which the ND particles to be separated or concentrated are ND particles containing a SiV color center, the ND particles not to be separated or concentrated may be ND particles not containing a color center, or may be particles containing at least one type of color center other than the SiV color center, such as an NV color center, a GeV color center, an SnV color center, or a PbV color center. The ND particles to be separated or concentrated may have another color center, such as an NV center, that does not resonantly absorb the laser light having an energy corresponding to the resonance absorption energy of the SiV color center.

A case in which the ND particles to be separated or concentrated have an SiV color center has been described above. However, even in a case in which the ND particles to be separated or concentrated are ND particles containing a GeV color center, an SnV color center, or a PbV color center, the ND particles can be separated or concentrated in the same manner as described above.

The mixed particles to which the method according to an embodiment of the present invention is applied include ND particles to be separated or concentrated and ND particles not to be separated or concentrated, and when the total of the mixed particles is 100 mass%, the content of the ND particles to be separated or concentrated is from 1 ppm to 50 mass%, and the content of the ND particles not to be separated or concentrated is from 50 to 99 mass% or more. When the method according to an embodiment of the present invention is applied, the proportion of the ND particles to be separated or concentrated can be increased by preferably 1 mass% or more, more preferably 10 mass% or more, still more preferably 20 mass% or more, and particularly preferably 50 mass% or more.

The resonance absorption energies of group-14 color centers of laser light are described below. The resonance absorption energy is a region having energy that is twice the full width at half maximum of the fluorescence peak of group 14 defects on the high energy side and the low energy side, respectively, and is centered on the energy described below.
Resonance absorption energy of SiV color center: from 1.62 to 1.75 eV, particularly 1.68 eV
Resonance absorption energy of GeV color center: from 1.94 to 2.18 eV, particularly 2.06 eV
Resonance absorption energy of SnV color center: from 1.88 to 2.12 eV, particularly 2.00 eV
Resonance absorption energy of PbV color center: from 2.19 to 2.42 eV, particularly 2.23 or 2.38 eV

The energy equal to or greater than the resonance absorption energy of the laser light is 1.62 eV or higher when the ND particles to be separated have a SiV color center, 1.94 eV or higher when the ND particles to be separated have a GeV color center, 1.88 eV or higher when the ND particles to be separated have an SnV color center, and 2.19 eV or higher when the ND particles to be separated have a PbV color center.

The output of the laser light having the resonance absorption energy described above is preferably from 0.1 to 100 W, and the line width is preferably 15 THz or less.

The irradiation time of the laser light is preferably from 1 to 1000 hours, and is more preferably from 20 to 200 hours.

Examples of the light source include a solid laser or a semiconductor laser, such as a titanium-sapphire laser or an Nd:YAG laser, and a titanium-sapphire laser is preferable.

The average size of ND primary particles is preferably from 1 to 100 nm, and more preferably from 5 to 20 nm. When the average size of the ND primary particles is within the above range, the target ND particles can be sufficiently separated or concentrated by the optical pressure generated by the resonance absorption of the laser light. The average size of the primary particles can be determined by the Scherrer equation based on the analysis results of powder X-ray diffractometry (XRD). Examples of the measurement instrument of XRD include the Multipurpose X-ray Diffraction System with Built-in Intelligent Guidance (available from Rigaku Corporation).

### Examples

Hereinafter, the present invention will be described more specifically with reference to Examples, but the present invention is not limited by these Examples.

### Example 1

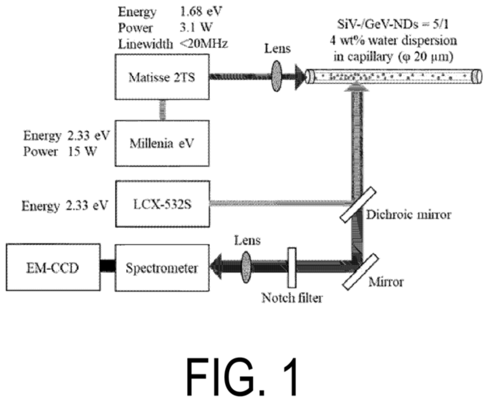

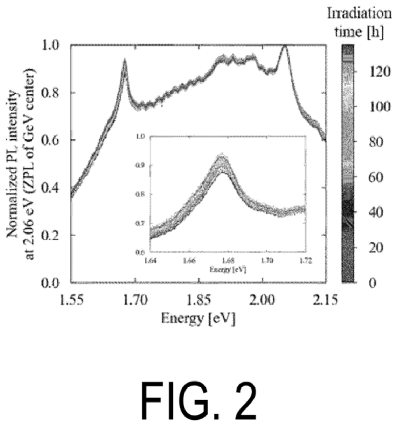

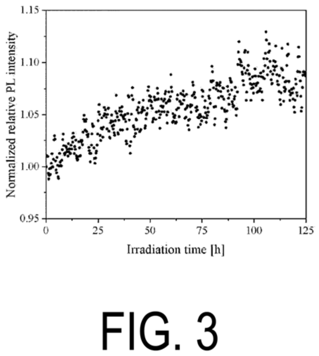

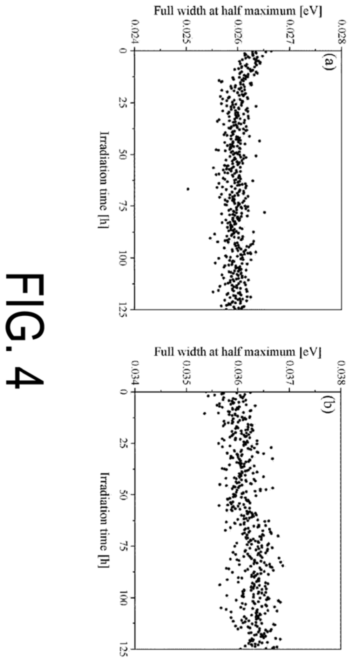

A mixture (SiV-undoped-NDs) of nanodiamonds containing an SiV center (SiV-NDs) and nanodiamonds not containing an SiV center (undoped-NDs) was obtained by the detonation method. Subsequently, a mixture (GeV-undoped-NDs) of nanodiamonds containing a GeV center (GeV-NDs) and nanodiamonds not containing a GeV center (undoped-NDs) was obtained by the detonation method. The SiV-undoped-NDs and the GeV-undoped-NDs were mixed at a weight ratio of 5/1 (SiV-undoped-NDs/GeV-undoped-NDs) to prepare an aqueous dispersion having a total ND concentration of 5 wt.%. A glass capillary having an inner diameter of 20 µm was filled with the dispersion, and both ends of the glass capillary were sealed with a vacuum grease. The capillary was irradiated from one end with a continuous wave (CW) titanium-sapphire laser (Matisse CR, Spectra physics) as an optical pressure source with the titanium-sapphire laser having an energy of 1.68 eV, an output of 3.1 W, and a line width of less than 20 MHz. The energy of the optical pressure source laser corresponds to the resonance absorption energy of the SiV center. The layout of these experimental devices is illustrated in FIG. 1. The titanium-sapphire laser serving as the optical pressure source was excited by a CW laser (Millennia eV, Spectra physics) with an energy of 2.33 eV and an output of 15 W. Subsequently, the photoluminescence (PL) of the SiV-NDs/GeV-NDs aqueous dispersion in the capillary irradiated with the optical pressure source laser was measured. A 2.33 eV CW laser (LCX 532S, Oxxius) was used as the excitation light, and the resulting fluorescence was dispersed by a spectrometer (SpectraPro HRS-300, Teledyne Princeton Instruments) equipped with a 150 gr./mm diffraction grating, and then detected by an air-cooled Electron Multiplying CCD (EMCCD; ProEM+: 16002 eXcelon3, Teledyne Princeton Instruments). The optical pressure source laser was irradiated for 100 hours, during which PL measurements were implemented at an interval of once every 15 minutes. The obtained PL spectrum is illustrated in FIG. 2. The PL intensity in FIG. 2 was normalized at 2.06 eV, which is the fluorescence peak of the GeV center. Furthermore, the change over time of the relative intensity between the fluorescence intensity of the SiV center (intensity of 1.68 eV) and the fluorescence intensity of the GeV center (intensity of 2.06 eV) in FIG. 2 is illustrated in FIG. 3. From FIGS. 2 and 3, the fluorescence intensity of the SiV-NDs irradiated with a laser having an energy of 1.68 eV, which corresponds to the resonance absorption energy, was strengthened over time as compared with the fluorescence intensity of the GeV-NDs irradiated with a laser having an energy not corresponding to the resonance absorption energy. These results indicate the concentration of the SiV-NDs, and about 10% concentration was confirmed in 100 hours. Further, FIGS. 4a and 4b respectively indicate the change over time in the full width at half maximum of the peak centered at 1.68 eV of the SiV center in FIG. 2 and the change over time in the full width at half maximum of the peak centered at 2.06 eV of the GeV center in FIG. 2. The line width of the fluorescence peak of the SiV-NDs irradiated with a laser having an energy of 1.68 eV, which corresponds to the resonance absorption energy, was reduced. In contrast, the line width of the fluorescence peak of GeV-NDs irradiated with a laser having an energy not corresponding to the resonance absorption energy did not change. These results indicate the sorting of SiV-NDs exhibiting fluorescence with a narrow line width, and SiV-NDs with a line width narrower by about 3% were sorted in a period of 100 hours.

The PL intensity was normalized at an intensity of 2.06 eV, which is the fluorescence peak of the GeV center. The enlarged view illustrates the area near the fluorescence peak of the SiV center.

### Example 2

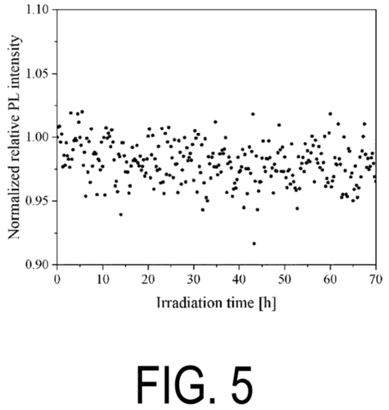

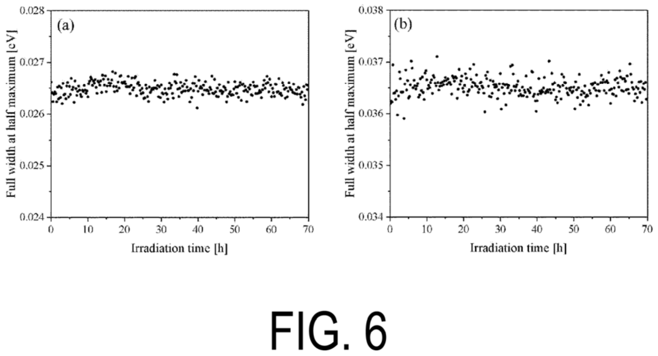

An experiment was conducted under the same conditions as in Example 1 with the exception that a laser having an energy of 1.57 eV, which is lower than the resonance energy of each of the SiV center and the GeV center, was adopted as the optical pressure source. According to the change over time in the ratio of the fluorescence intensity of 1.68 eV of the SiV center to the fluorescence intensity of 2.06 eV of the GeV center as illustrated in FIG. 5, no change was observed in the relative intensities of fluorescence of the SiV center and the GeV center. In addition, according to the change over time in the full width at half maximum of the peak centered at 1.68 eV of the SiV center and the full width at half maximum of the peak centered at 2.06 eV of the GeV center as illustrated in FIG. 6, the full width at half maximum of both peaks did not change. Therefore, the experiment of Example 1 demonstrated that SiV-NDs were concentrated by the resonance absorption force, and SiV-NDs having a narrow full width at half maximum were sorted.

## Claims

1. A method for separating or concentrating nanodiamond (ND) particles containing a group-14 color center, the method comprising irradiating a dispersion containing mixed particles of ND particles containing a color center of any one group 14 element selected from the group consisting of Si, Ge, Sn, and Pb (a group-14 color center) and ND particles not containing the group-14 color center with laser light having an energy equal to or higher than a resonance absorption energy of the group-14 color center and thereby selectively moving the ND particles containing the group-14 color center using a optical pressure generated by absorption of the laser light.

2. The method for separating or concentrating ND particles containing a group-14 color center according to claim 1, wherein the laser light is laser light having an energy equal to the resonance absorption energy of the group-14 color center, and the optical pressure is a optical pressure generated by resonance absorption of the laser light.
